# EUROPEAN PATENT APPLICATION

(11) **EP 2 112 820 A1**
(43) Date of publication of application: **28.10.2009**
(21) Application number: 08382016.7
(22) Date of filing: 25.04.2008
(51) Int. Cl.: H04N 5/00

(54) **Delivering system of content on demand**

(71) Applicant: Alcatel Espana, S.A., 28045 Madrid (ES)
(72) Inventor: Villegas Nuñez, Alvaro, 28033 Madrid (ES)
(74) Representative: Elzaburu Marquez, Alberto

(57) **Abstract**

On-demand content delivery system in which distributed storage means (18, 19) are connected to transmission servers (14, 15) connected to intelligent control means (12) over a telecommunications network (11), and in which the intelligent control means (12) includes an Internet small computer system interface giving it read access to a plurality of multimedia data storage means (18-n, 19-m) that are connected via a communications bus (16, 17) to at least one transmission server (14, 15) which also includes an Internet small computer system interface (24).

## Description

### Aim of the invention

The present invention relates, in general, to a system for distributing multimedia content to subscribers from a multimedia-content provider, the provider and subscribers being connected over a telecommunications network, such as a network based on Internet protocols (IP network).

### State of the art

A point-to-multipoint system includes a server as transmission device, on the service-provider side, and decoders as receiving devices on the subscriber side; a telecommunications network that can use Internet protocols, IP network, connects the two sides together.

The decoders have been configured, in each case, as set-top box receivers (STB receivers). The operating software of the STB receivers must be updated when there is a new version of the operating software.

When a subscriber wants to see a particular film, he sends a request through his STB receiver that includes the film that he wants to watch.

Said request reaches the provider's server, which looks in its disk storage system for the location of the file containing the film requested and desired by the subscriber.

Once the file has been found, the server sends data packets corresponding to the content of the desired file, using continuous streaming mode techniques, to the requesting STB receiver so that it can be decoded and displayed by the subscriber, the timing of transmission being strictly controlled by the server at all times to ensure that a buffer of the STB receiver is never empty.

Consequently, this procedure requires an action by the receiving device followed by a request to the server and a sustained data transmission action by the server so that the data of the desired multimedia content is received.

If a multiplicity of subscribers request the same multimedia data through their respective STB receiving devices, each receiving device must request said multimedia data individually.

The transmission server sends said multimedia data several times simultaneously to all the STB receiving devices, setting up a separate data transmission session for each receiving device, on account of the structure of the distribution system.

This uses a certain amount of server resources, which results in the need for specific architecture for this type of transmission of multimedia data in real time, which requires expensive servers with limited capacity, especially if the number of simultaneous users grows significantly.

### Characterization of the invention

This invention seeks to solve or reduce one or more of the drawbacks outlined above using an on-demand content delivery system as is claimed in Claim 1. Embodiments of the invention are set out in the dependent claims.

One aim of the invention is to provide a system for accessing multimedia files that requires a limited exchange of messages between an intelligent control receiver such as a set-top box receiver (STB receiver) and one or more multimedia-content transmission devices such as a server for on-demand services.

Another aim of the invention is to provide access to a distributed storage system that is cheap overall for the multimedia-content provider and simple to implement on the operator side and/or the multimedia service-provider side.

Another aim of the invention is to provide a multimedia service delivery system that is cheap and easy to scale up depending on the quantity of multimedia data requested and the frequency with which each multimedia file is requested, i.e. that can easily adapt to the needs of the market at any given moment.

Another aim of the invention is to provide the multimedia service provider with a simple server by simplifying the continuous operation mode (streaming).

### Brief description of the figures

A more detailed explanation of the invention is given in the following description based on the attached figures in which:

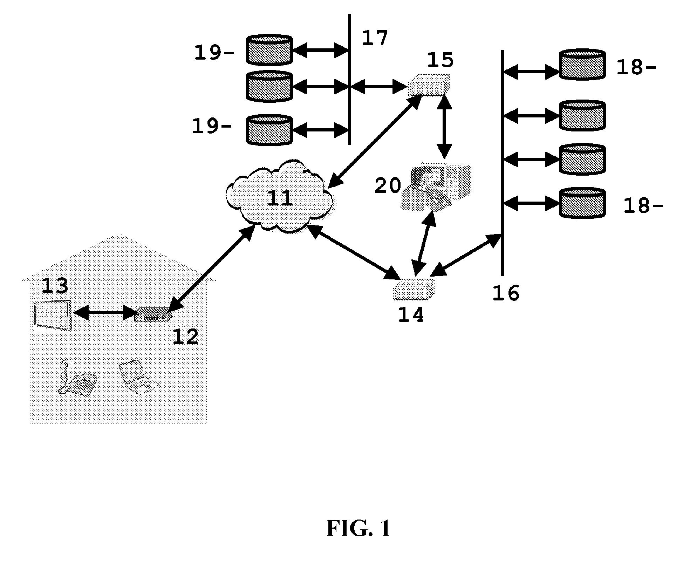

Figure 1 shows a distribution system for viewable multimedia data according to the invention.

### Description of the invention

A system for distributing multimedia data from a distributed storage system in relation to a provider 20 of on-demand multimedia services is illustrated below, with reference to Figure 1.

The system in Figure 1 includes a point-to-multipoint system, which includes a data storage system 18, 19 for distributed multimedia data which includes a plurality of storage means such as storage disks 18-n, 19-m, each connected to a control means or manager for storage means 14, 15 through a communications bus 16, 17 such as a local high-performance data bus, which may be SCSI, Serial ATA or Fibre Channel.

Said control means 14 is connected to a telecommunications network 11 such as an IP network, and acts as a first target server using the Internet Small Computer System Interface iSCSI protocol, through which remote clients such as a set-top box receiver 12, the subscriber's STB receiver, can access the aforementioned distributed disks 18-n, 19-m.

Furthermore, the first control means 14 can use its IP connection to access other remote disks 19-m via other targets as well, second iSCSI server 15, target server, and the content of these remote disks 19-m can be offered to clients connected to the first server 14 as if it were contained on the disks 18-n that are connected to it through the first high-performance local data bus 16.

Obviously, it must be understood that a plurality of iSCSI transmission servers 14, 15 can be connected to a plurality of subscriber iSCSI-STB receivers over the telecommunications network 11. Furthermore, each iSCSI transmission server has a connection bus, for example, serial ATA connected to a plurality of storage means 18-n, 19-m.

Obviously, the STB receiver 12 is connected to a display screen 13 through which the subscriber can view on-demand multimedia services previously requested from the transmission server 14.

The STB receiver 12 also includes a client Internet small computer system interface iSCSI, iSCSI-STB receiver, so that data stored on remote iSCSI servers 14 is accessed by the local file system of the STB receiver 12 as if said data was on a local disk connected directly to that STB receiver 12.

Therefore, the iSCSI-STB receiver 12 includes control and management means to install and manage a local file system on multiple disks connected to iSCSI transmission servers using RAID technology (Redundant Arrays of Inexpensive Disks), and particularly the RAID 0 configuration, data striping, which stores consecutive portions of the same file on successive disks, resulting in a substantially balanced load distribution of the most requested files.

The disks that form the RAID 0 may be local and/or remote disks served by target transmission iSCSI servers 14, connected to STB receivers that include iSCSI client means through the IP network 11.

In short, the point-to-multipoint system contains multiple iSCSI transmission server devices 14, 15, as the file system is distributed over a plurality of remote disks 18-n, 19-m, an IP network 11 and a plurality of iSCSI-STB receiver devices 12.

Consequently, the point-to-multipoint system has been configured, for example, as an on-demand service, service-on-demand VoD, in which clients use their iSCSI-STB receivers 12 to send information to the VoD iSCSI transmission servers 14 over the IP network 11.

The information constitutes, for example, calling signals by means of which the file system in the STB receiver 12 requests transmission of virtual sectors of multimedia data from the remote distributed disks 18-n via the iSCSI protocol.

The first STB receiver 12 includes operating software that operates it. The software is used, for example, to read, process, present and allow the selection of films from the lists obtained by the iSCSI-STB receiver 12 as files in the file system installed on the remote disks 18-n.

Consequently, the distributed storage means connected to the first array of iSCSI transmission servers 14 are managed directly from each iSCSI-STB receiver 12 when a client makes a selection and sends the corresponding message or messages to the first iSCSI transmission server 14.

It should be noted that the iSCSI-STB receiver 12 only has read access to the distributed disks 18-n, 19-m. However, the operator 20 of the first, second iSCSI transmission server 14, 15 has read/write access to the same distributed disks 18-n, 19-m.

When the iSCSI transmission server device 14 receives a message from an iSCSI-STB receiver 12, it locates the disk or disks 18-n, 19-m containing the desired multimedia data and sends it to the iSCSI-STB receiver 12 that made the request.

In other words, a plurality of iSCSI-STB receivers 12 can simultaneously obtain read access to the same files, retrieving part of the operating software using the iSCSI protocol, in the form of data packets, which are received by each iSCSI-STB receiver device 12 that made the same request.

Thanks to the distribution of data in RAID 0 in the file system, at any given time each iSCSI transmitter 14 only receives requests from some of the iSCSI-STB receivers 12 that are reading the same file.

This is followed by retrieval of the remainder of the desired multimedia data packets corresponding to the client's selection for display on the screen 13.

The iSCSI transmission servers 14, 15 containing each portion of the data required by the iSCSI-STB receiver 12 are located at all times by the file system of the iSCSI receiver 12, without the need for the iSCSI transmission servers 14, 15 to manage top-level information on the files or films stored on the distributed disks 18-n, 19-m connected to them.

Consequently, the iSCSI transmission server 14, 15 is configured as an iSCSI gateway used to distribute the packets of multimedia data corresponding to the selections made by subscribers through their respective iSCSI-STB receivers 12 without the iSCSI transmission servers 14, 15 managing or even being aware of the configuration of the file system that uses them as a storage means 18-n, 19-m.

On account of all the foregoing, the iSCSI-STB receiver 12 manages and controls the retrieval and read access of the data packets corresponding to a selection made by a subscriber, stored on an array of distributed disks, requiring minimum participation of the iSCSI transmission servers.

However, the operator 20 can use an iSCSI transmission server 14, 15 to access the same array of distributed disks 18-n, 19-m in read/write mode to modify multimedia data packet files stored on the array of distributed disks.

It should be noted that if an increase in storage capacity is required, more disks 18-n, 19-m can be added to the iSCSI transmission servers 14, 15 without having to modify the overall architecture; the only effect of this change is that the remote disks will appear with more capacity and, therefore, the file system installed on them will be larger.

If the number of clients simultaneously accessing the same set of files increases significantly, which can typically occur with the most popular films, the file system can be reconfigured by adding new disks to the disk array in a RAID configuration, i.e. installing new iSCSI transmission servers 14, 15 connected to the IP network 11.

By increasing the width of the RAID in this way, the files will be distributed over a greater number of remote disks 18-n, 19-m which results in a network with a balanced load, i.e. an even distribution of multimedia data files between the storage disks 18-n, 19-m.

It should be noted that thanks to the combination of local file systems in the iSCSI receiver 12 installed in a RAID configuration on remote iSCSI disks with a balanced load distribution, distributed management of the system occurs naturally, without the need for a complex management system on the content transmission servers belonging to the on-demand service providers.

When a request is made for access to less popular content, an iSCSI transmission server 14 may not have the data sector that the requesting iSCSI-STB receiver 12 is requesting; in this case the first iSCSI transmission server 14 can obtain, in turn, this data from a remote disk 19-m that it also accesses using the iSCSI protocol over the IP network 11, acting as a client of the second iSCSI transmission server 15.

Therefore, thanks to the iSCSI communication protocol and, as the iSCSI-STB receiver 12 only requires read access to the distributed disks 18-n, 19-m, multimedia data packet files corresponding to a subscriber selection are retrieved through a cascading connection of the first and second iSCSI transmission servers 14, 15, entirely transparently for the first iSCSI-STB receiver 12.

Said cascading connection does not prevent the retrieval and reception of the multimedia data packets desired by the subscriber.

The iSCSI-STB receiver sees the entire array of distributed disks as a local disk array of its own.

Consequently, the iSCSI server 14, 15 does not have to ensure that packets are received by each iSCSI-STB receiver 12.

Furthermore, the iSCSI transmission server 14, 15 does not have to know the details of the file system, the films stored on them or the status of the clients accessing each film, for example, their position.

Furthermore, the iSCSI servers 14, 15 do not have to provide each client with data in time to ensure that their receive buffers are never empty, as this task is carried out by the operating system of the iSCSI-STB receiver 12, whose file system takes care of requesting the data from the iSCSI servers at the right time.

Consequently, the iSCSI transmission server 14, 15 does not perform any control or management of the requests made by its subscribers, other than ensuring a balanced distribution of resources in the event of an excessive number of requests at a given moment.

The embodiments and examples set out in this specification are presented as the best explanation of this invention and its practical application, thereby allowing the person skilled in the art to implement and use the invention. However, the person skilled in the art will recognize that the description and examples above have been given for the purpose of illustration and only by way of example. The description as outlined is not intended to be exhaustive or to limit the invention to the exact form described. Many modifications and variations are possible in light of the foregoing teaching without departing from the spirit or scope of the claims below.

## Claims

1. **On-demand content delivery system** including storage means (18, 19) for distributed multimedia data connected to at least one transmission server (14, 15), which can in turn be connected to at least one intelligent control means (12) connected to a display means (13) over a telecommunications network (11), **characterized in that** the intelligent control means (12) includes an Internet small computer system interface giving it read access to a plurality of multimedia data storage means (18-n, 19-m) that are connected via a communications bus (16, 17) to at least one transmission server (14, 15) which also includes an Internet small computer system interface.

2. **System** according to Claim 1; **characterized in that** the transmission server (14, 15) is a video-on-demand server.

3. **System** according to Claim 2; **characterized in that** the intelligent control means (12) is a set-top box receiver.

4. **System** according to Claim 2; **characterized in that** the communications bus (14, 15) may be a high-performance local data bus such as an SCSI, Serial ATA or Fibre Channel bus.

5. **System** according to Claim 4; **characterized in that** the iSCSI-STB receiver (12) controls and manages a system of local files on a plurality of disks (18-n, 19-m) connected to iSCSI transmission servers (14, 15) using RAID technology (Redundant Arrays of Inexpensive Disks).

6. **System** according to Claim 5; **characterized in that** the RAID technology used is the RAID 0 configuration, data striping, which stores consecutive portions of the same file on successive disks, resulting in a substantially balanced load distribution of the most requested files.

7. **Intelligent control means** connected to storage means for distributed multimedia data over a telecommunications network (11) and a transmission server (14, 15) that, in turn, is connected to a communications bus (16, 17) and to the storage means; **characterized in that** the intelligent control means (12) includes an Internet small computer system interface giving it read access to the plurality of storage means (18-n, 19-m) of distributed multimedia data.

8. **Means** according to Claim 7, **characterized in that** the intelligent control means (12) is a set-top box receiver.

9. **Means** according to Claim 8; **characterized in that** the RAID technology used is the RAID 0 configuration, data striping, which stores consecutive portions of the same file on successive disks, resulting in a substantially balanced load distribution of the most requested files.

10. **Method for delivering content on demand** from storage means (18, 19) of distributed multimedia data connected to at least one transmission server (14, 15) which, in turn, can be connected to at least one intelligent control means (12) connected to a display means (13) over a telecommunications network (11); **characterized in that** the method includes the following steps:
• Selecting an on-demand service using an intelligent control means (12) that includes an Internet small computer system interface,
• Having read access to a plurality of storage means (18-n, 19-m) of multimedia data that are connected via a communications bus (16, 17) to at least one transmission server (14, 15) that also includes an Internet small computer system interface.

## Amended claims

### Amended claims in accordance with Rule 137(2) EPC.

**1. On-demand content delivery system** including storage means (18, 19) for distributed multimedia data connected to at least one transmission server (14, 15), which can in turn be connected to at least one intelligent control means (12) connected to a display means (13) over a telecommunications network (11), **characterized in that** the intelligent control means (12) includes an Internet small computer system interface iSCSI configured to read access to a plurality of multimedia data storage means (18-n, 19-m) connected via a communications bus (16, 17) to at least a transmission server (14, 15) also includes an Internet small computer system interface iSCSI; which transmits files relating to a system of local files on the plurality of disks (18-n, 19-m) to the iSCSI-STB receiver (12) using Redundant Arrays of Inexpensive Disks RAID technology; being the iSCSI-STB receiver (12) adapted to control and manage data striping, which stores consecutive portions of the same file on successive disks, resulting in a balanced load distribution of the most requested files.

**2. System** according to Claim 1; **characterized in that** the transmission server (14, 15) is a video-on-demand server.

**3. System** according to Claim 2; **characterized in that** the intelligent control means (12) is a set-top box receiver.

**4. System** according to Claim 1; **characterized in that** the communications bus (14, 15) can be a high-performance local data bus such as an SCSI, Serial ATA or Fibre Channel bus.

**5. Intelligent control means** connected to storage means for distributed multimedia data over a telecommunications network (11) and a transmission server (14, 15) that, in turn, is connected to a communications bus (16, 17) and to the storage means;
**characterized** the intelligent control means (12) includes an Internet small computer system interface iSCSI configured to read access to a plurality of multimedia data storage means (18-n, 19-m) connected via a communications bus (16, 17) to at least a transmission server (14, 15) also includes an Internet small computer system interface iSCSI; which transmits files relating to a system of local files on the plurality of disks (18-n, 19-m) to the iSCSI-STB receiver (12) using Redundant Arrays of Inexpensive Disks RAID technology; being the iSCSI-STB receiver (12) adapted to control and manage data striping, which stores consecutive portions of the same file on successive disks, resulting in a balanced load distribution of the most requested files.

**6. Intelligent control means** according to Claim 5, **characterized in that** the intelligent control means (12) is a set-top box receiver.

**7. Method for delivering content on demand** from storage means (18, 19) of distributed multimedia data connected to at least one transmission server (14, 15) which, in turn, can be connected to at least one intelligent control means (12) connected to a display means (13) over a telecommunications network (11); **characterized in that** the method includes the following steps:
• Selecting an on-demand service using an intelligent control means (12) that includes an Internet small computer system interface,
• Having read access to a plurality of storage means (18-n, 19-m) of multimedia data that are connected via a communications bus (16, 17) to at least one transmission server (14, 15) that also includes an Internet small computer system interface.
